# FASCICULE DE BREVET EUROPEEN

(11) **EP 2 038 614 B1**
(45) Date de publication et mention de la délivrance du brevet: **12.06.2013**
(21) Numéro de dépôt: 07765820.1
(22) Date de dépôt: 09.07.2007
(51) Int. Cl.: G01C 23/00, G02B 27/01

(54) **VISEUR TETE HAUTE A AFFICHAGE SECURISE**
SICHERES HEAD-UP-DISPLAY
SECURE HEAD-UP DISPLAY

(30) Priorité: 11.07.2006 FR 0606308
(43) Date de publication de la demande: 25.03.2009
(73) Titulaire: Thales, 92200 Neuilly Sur Seine (FR)
(72) Inventeur: SOLER, Michel, 33560 Carbon-Blanc (FR)
(74) Mandataire: Bréda, Jean-Marc
(86) Numéro de dépôt international: PCT/EP2007/056951
(87) Numéro de publication internationale: WO 2008/006798

(56) Documents cités:
- EP-A- 0 511 154
- US-A- 4 145 952
- US-A1- 2003 030 911

## Description

Le domaine de l'invention est celui de la sécurisation des informations nécessaires au pilotage pour les cockpits d'aéronefs.

Généralement, les visualisations présentes dans un cockpit d'aéronef sont de deux types. On distingue :
● les visualisations de planches de bord encore appelées visualisations « Tête Basse » ou HDD, acronyme signifiant « Head Down Display » et
● les visualisation dites « Tête Haute » encore appelées HUD, acronyme signifiant « Head Up Display ». Le brevet US 4 145 952 décrit un HUD dans une configuration de symbologie particulière qui est l'aide au tir.

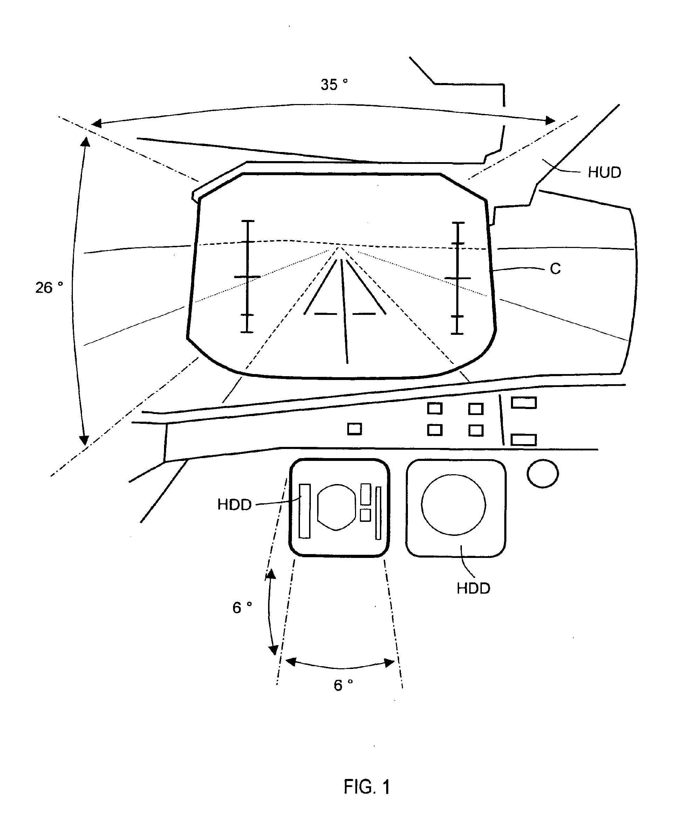

Sur la figure 1, qui représente en partie une planche de bord d'aéronef vue du pilote, ont été représentés en traits continus gras ces différentes visualisations HDD et HUD.

Il existe également des visualisations intégrées au casque du pilote permettant de présenter des symbologies voisines de celles des HDDs ou des HUDs. Le brevet EP 0 511 154 décrit un exemple de ce type de symbologie.

Les visualisations de planches de bord ou HDD sont constituées essentiellement de grands écrans, généralement à cristaux liquides fournissant à l'équipage les différentes informations nécessaires au pilotage, à la navigation et au contrôle de l'appareil. La visualisation affichant les informations nécessaires au pilotage est encore appelée PFD, acronyme signifiant « Primary Flight Display ». Ces visualisations sont reliées au moyen de bus de données à des calculateurs électroniques de bord qui génèrent, à partir d'informations venant de différents senseurs, les données nécessaires à l'affichage.

Bien entendu, les présentations d'informations sont vitales pour la sécurité de l'appareil. L'incendie ou l'apparition de fumées dans le cockpit font partie des incidents extrêmement graves susceptibles de perturber la lisibilité des informations fournies par les visualisations de planche de bord. S'il est, en effet, possible de protéger en partie l'équipage de la fumée au moyen de masques à oxygène, il n'existe que peu de solutions permettant de fournir à l'équipage les informations visuelles nécessaires au pilotage lorsque la fumée envahit le cockpit. En cas de défaillance des systèmes de ventilation, Une première solution consiste en l'emploi de systèmes gonflables intercalés entre les écrans de visualisation et le visage du pilote. Cette solution qui n'est pas généralisée présente de nombreux inconvénients. Elle est très encombrante, difficile à mettre en oeuvre et limite considérablement les mouvements de l'équipage.

Pour pallier aux inconvénients précédents, les demandes de brevet US 2003/0030911 et WO 00/28281 proposent d'intégrer la fonction de présentation des informations critiques dans le masque à oxygène. Cette solution présente de nombreux inconvénients. Elle ne peut être mise en oeuvre que, lorsque le pilote porte son masque, c'est-à-dire dans des conditions où la sécurité du vol est gravement compromise. Il est, bien entendu, impossible d'assurer une superposition des informations présentées sur le paysage extérieur. Enfin, c'est une solution complexe à mettre en oeuvre et nécessairement coûteuse dans la mesure où le système mis en oeuvre doit être de petites dimensions, parfaitement sécurisé et opérationnel dans des conditions extrêmes.

Les visualisations dites « Tête Haute », encore appelées en terminologie anglo-saxonne « Head-Up Displays » et également connues sous l'acronyme « HUD » ont d'abord été utilisés sur avions d'arme pour se généraliser ensuite dans les années 1980 à tous types d'appareils. Ils présentent au pilote une information visuelle collimatée dans son champ de vision et en superposition sur le paysage extérieur. Cette information visuelle concerne plus particulièrement le pilotage et sert notamment au décollage et à l'atterrissage. On peut ainsi présenter au pilote une piste synthétique en superposition sur le paysage comme indiqué en figure 1. Un des grands intérêts du « HUD » est qu'il permet de présenter une image dite « conforme », c'est-à-dire correspondant parfaitement à une image réelle.

Un « HUD » comporte donc trois parties principales :
● Un calculateur électronique relié aux bus de données avion ;
● Un afficheur à haute luminosité qui peut être un tube cathodique ou un écran à cristaux liquides ;
● Un système optique de collimation et de superposition d'images sur le paysage extérieur. La superposition sur le paysage est assurée généralement par une lame optique C appelée « combineur », comme on peut le voir sur la figure 1.

L'objet de l'invention est d'afficher, en cas d'incendie ou de présence de fumées, les informations vitales concernant le pilotage sur le viseur Tête Haute.

Plus précisément, l'invention a pour objet un viseur Tête Haute pour aéronef, caractérisé en ce qu'il comporte des moyens de calcul d'une symbologie de type « PFD » comprenant au moins les informations de vitesse, d'altitude et d'attitude de l'aéronef, le viseur Tête Haute étant un instrument de visualisation intégré et fixé dans le cockpit et présentant une image collimatée.

Avantageusement, les moyens de calcul permettent de générer plusieurs modes possibles de présentation de la symbologie, au moins un des modes générant une symbologie simplifiée comportant uniquement les informations de vitesse, d'altitude et d'attitude.

Avantageusement, les moyens de calcul génèrent des tracés dont la largeur angulaire vaut entre 5 milliradians et 10 milliradians.

Avantageusement, les moyens de calcul génèrent des symboles dits « conformes », c'est-à-dire représentatifs du paysage extérieur et dessinés de façon qu'ils aient une taille apparente à la même échelle que ledit paysage extérieur.

Avantageusement, la luminance des symboles affichés est égale à la luminance maximale permise par l'afficheur.

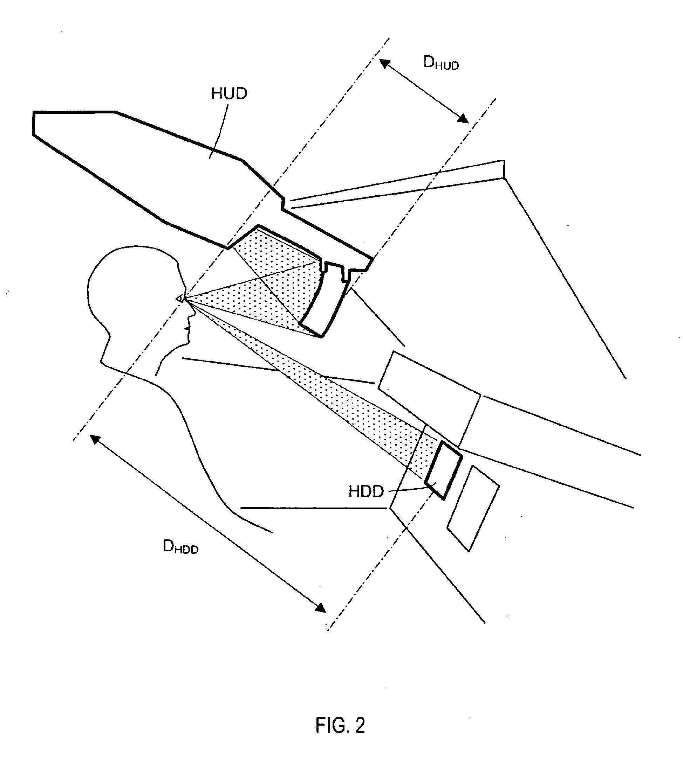

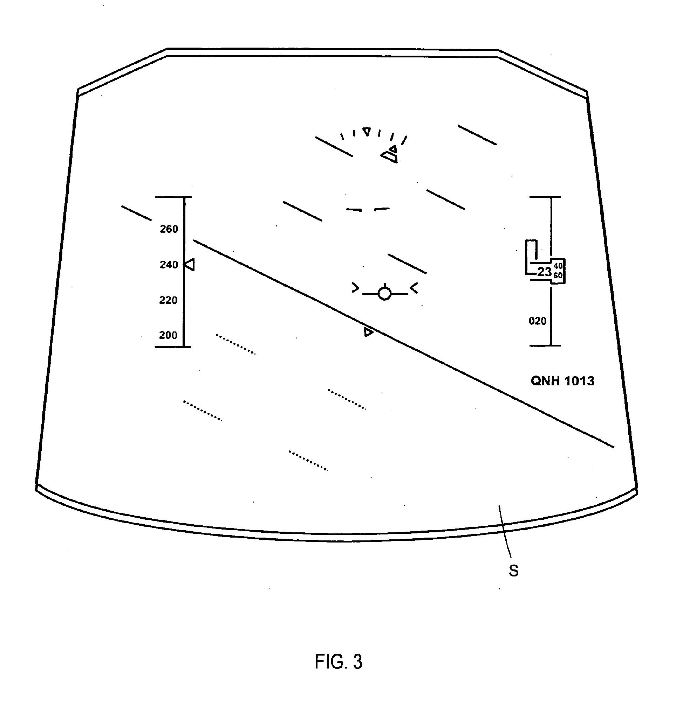

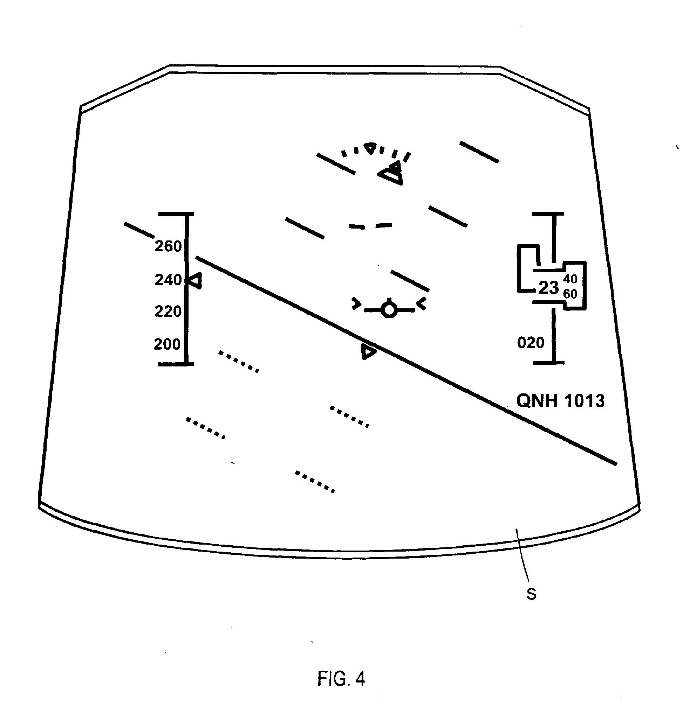

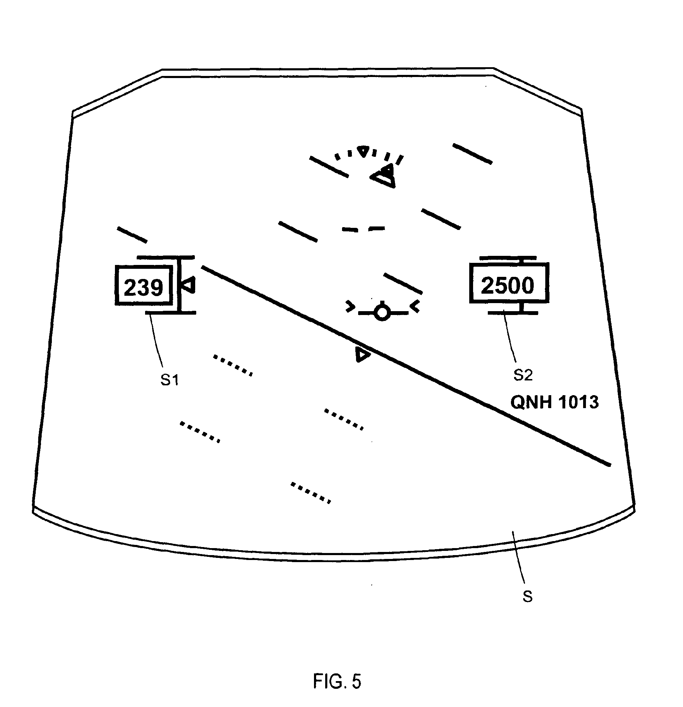

L'invention sera mieux comprise et d'autres avantages apparaîtront à la lecture de la description qui va suivre donnée à titre non limitatif et grâce aux figures annexées parmi lesquelles :
● La figure 1 représente une vue partielle d'une planche de bord d'aéronef vue du pilote ;
● La figure 2 représente une vue partielle d'une planche de bord d'aéronef vue de profil ;
● La figure 3 représente un premier exemple d'une symbologie de type PFD générée dans un viseur Tête Haute ;
● La figure 4 représente un second exemple d'une symbologie de type PFD générée dans un viseur Tête Haute ;
● La figure 5 représente un troisième exemple d'une symbologie de type PFD générée dans un viseur Tête Haute.

La réalisation technique de l'invention ne pose aucun problème technique particulier. Il suffit, en effet, de relier soit le calculateur dédié au viseut Tête Haute, soit le viseur Tête Haute lui-même au bus de données transportant les informations nécessaires à l'établissement de la symbologie « PFD ». La création de la symbologie « PFD » spécifiquement adaptée à une présentation d'informations collimatée ne pose pas de problèmes particuliers dans la mesure où elle ne nécessite pas de moyens de calculs ou de mémorisation spécifiques. Comme on le verra dans la suite de la description, elle peut être spécifiquement adaptée pour améliorer la lisibilité des informations en cas de présence de fumée dans le cockpit.

Les avantages d'une présentation des informations essentielles nécessaires au pilotage dans le viseur Tête Haute plutôt que sur une visualisation de planche de bord sont importants et sont détaillés ci-dessous.

### 1^{ère} avantage : Grand champ de vision.

Comme on peut le voir sur la figure 1, les viseurs Tête Haute présentent un champ de vision important qui atteint classiquement 35 degrés en gisement et 26 degrés en site. Le champ de vision d'une visualisation Tête Basse de planche de bord ne passe pas 6 degrés en site et en gisement. Par conséquent, il est possible d'afficher des caractères de beaucoup plus grande taille apparente dans un viseur Tête Haute, ce qui accroît leur lisibilité.

### 2^{ème} avantage : Proximité du pilote

Comme on peut le voir sur la figure 2, la distance D_{HDD} séparant l'oeil du pilote de l'afficheur d'une visualisation Tête Basse est de l'ordre du mètre alors que la distance D_{HUD} séparant l'oeil du pilote de l'afficheur d'une visualisation Tête Haute est bien inférieure, de l'ordre de 0,5 mètre. Par conséquent, en moyenne, la présence de fumée entre le pilote et une visualisation sera plus importante s'il s'agit d'une visualisation Tête Basse que s'il s'agit d'une visualisation Tête Haute. La lisibilité des informations venant d'une visualisation Tête Haute sera donc meilleure.

### 3^{ème} avantage : Luminance élevée

Par principe, les « HUD » sont conçus pour que l'information collimatée puisse être lu même en cas de fort ensoleillement. Par conséquent, la luminance maximale possible et le contraste dans ce type de visualisation sont très élevés, bien supérieurs à ceux d'un afficheur HDD qui ne subit pas les mêmes contraintes. Généralement, la luminance maximale et le contraste d'une visualisation HUD sont dix fois supérieurs à ceux d'un HDD.

### 4^{ème} avantage : Symbologie adaptée

Il est possible d'adapter la symbologie pour la rendre la plus lisible possible en cas de présence de fumée. On peut jouer facilement sur deux paramètres qui sont :
● La largeur de tracé. Typiquement, la largeur de tracé de la symbologie d'un viseur tête haute est de l'ordre du milliradian ; Il est possible d'élargir de façon importante cette largeur pour améliorer la lisibilité. Les figures 3 et 4 présentent ainsi deux symbologies S, la première avec une tracé normal, la seconde avec un tracé dont la largeur a été multiplié par deux ;
● L'allégement et la simplification de la symbologie. Ainsi, sur la figure 5, les échelles indicatrices des vitesses S1 à gauche et de l'altitude S2 à droite de la symbologie S de la figure 5 ont été remplacées par des simples indications de vitesse et d'altitude écrites dans des caractères plus importants.

### 5^{ème} avantage : Symbologie conforme

Il est possible de conserver certaines fonctions d'affichage du viseur HUD. Ces symboles dits « conformes » sont représentatifs du paysage extérieur et dessinés de façon qu'ils aient une taille apparente à la même échelle que ledit paysage extérieur et se superposent à lui.

Ainsi, on peut améliorer de façon sensible et au prix de modifications mineures la lisibilité des informations essentielles en cas de fumée dans le cockpit en les présentant dans le viseur tête Haute.

## Revendications

1. Viseur Tête Haute pour aéronef, **caractérisé en ce qu'**il comporte des moyens de calcul d'une symbologie de type « PFD » comprenant au moins les informations de vitesse, d'altitude et d'attitude de l'aéronef, le viseur Tête Haute étant un instrument de visualisation intégré et fixé dans le cockpit et présentant une image collimatée, **caractérisé en ce que**, en cas de détection d'incendie ou de fumée, la luminance des symboles affichés est la luminance maximale permise par l'afficheur.

2. Viseur Tête Haute pour aéronef selon la revendication 1, **caractérisé en ce que** les moyens de calcul permettent de générer plusieurs modes possibles de présentation de la symbologie, au moins un des modes générant une symbologie simplifiée comportant uniquement les informations de vitesse, d'altitude et d'attitude.

3. Viseur Tête Haute pour aéronef selon l'une des revendications 1 ou 2, **caractérisé en ce que** les moyens de calcul génèrent des tracés dont la largeur angulaire vaut entre 5 milliradians et 10 milliradians.

4. Viseur Tête Haute pour aéronef selon l'une des revendications précédentes, **caractérisé en ce que** les moyens de calcul génèrent des symboles dits « conformes », c'est-à-dire représentatifs du paysage extérieur et dessinés de façon qu'ils aient une taille apparente à la même échelle que ledit paysage extérieur.

## Patentansprüche

1. Headup-Display für ein Flugzeug, **dadurch gekennzeichnet, dass** es Mittel zum Berechnen von Symbolen des "PFD"-Typs umfasst, die wenigstens Geschwindigkeits-, Höhen- und Lageinformationen über das Flugzeug beinhalten, wobei das Headup-Display ein Anzeigeinstrument ist, das in einem Cockpit integriert und montiert ist und ein kollimiertes Bild präsentiert, **dadurch gekennzeichnet, dass** im Falle der Erkennung von Feuer oder Rauch die Helligkeit der angezeigten Symbole die höchste vom Display zugelassene Helligkeit ist.

2. Headup-Display für ein Flugzeug nach Anspruch 1, **dadurch gekennzeichnet, dass** die Rechenmittel die Erzeugung mehrerer möglicher Modi zum Präsentieren der Symbole zulassen, wobei in einem der Modi ein vereinfachtes Symbol erzeugt wird, das nur die Geschwindigkeits-, Höhen und Lageinformationen beinhaltet.

3. Headup-Display für ein Flugzeug nach Anspruch 1 oder 2, **dadurch gekennzeichnet, dass** die Rechenmittel Grafiken erzeugen, deren Winkelbreite zwischen 5 Milliradians und 10 Milliradians beträgt.

4. Headup-Display für ein Flugzeug nach einem der vorherigen Ansprüche, **dadurch gekennzeichnet, dass** die Rechenmittel Symbole erzeugen, die als "konforme" Symbole bezeichnet werden, d.h. dass sie das Außengelände repräsentieren und so gezeichnet sind, dass sie eine scheinbare Größe im selben Maßstab wie das Außengelände haben.

## Claims

1. A head-up display for aircraft, **characterised in that** it comprises means for calculating "PFD" type symbols that at least comprise aircraft speed, altitude and attitude information, said head-up display being a display instrument that is integrated and fixed inside a cockpit and presents a collimated image, **characterised in that**, in the event of the detection of fire or smoke, the luminance of the displayed symbols is the maximum luminance that is permitted by the display.

2. The head-up display for aircraft according to claim 1, **characterised in that** said calculation means allow the generation of several possible modes for presenting the symbols, at least one of said modes generating a simplified symbol that only comprises the speed, altitude and attitude information.

3. The head-up display for aircraft according to claim 1 or 2, **characterised in that** said calculation means generate plots, the angular width of which is between 5 milliradians and 10 milliradians.

4. The head-up display for aircraft according to any one of the preceding claims, **characterised in that** said calculation means generate symbols that are referred to as "conforming" symbols, that is they represent the external terrain and are drawn so that they have an apparent size that is to the same scale as said external terrain.
